# EUROPÄISCHE PATENTANMELDUNG

(11) **EP 4 231 059 A1**
(43) Veröffentlichungstag der Anmeldung: **23.08.2023**
(21) Anmeldenummer: 22157857.8
(22) Anmeldetag: 22.02.2022
(51) Int. Cl.: G01V 8/20, G01V 8/22

(54) **SENSOR**

(71) Anmelder: Leuze electronic GmbH + Co. KG, 73277 Owen/Teck (DE)
(72) Erfinder: Feller, Bernhard, 86316 Friedberg (DE); Keßler, Daniela, 89150 Laichingen (DE); Ruff, Markus, 73734 Esslingen am Neckar (DE); Brunner, Rolf, 82223 Eichenau (DE); Ruf, Tanita, 73240 Wendlingen (DE); Koperski, Joachim, 85521 Ottobrunn (DE); Jüttner, Andreas, 81543 München (DE)
(74) Vertreter: Ruckh, Rainer Gerhard

(57) **Zusammenfassung**

Die Erfindung betrifft einen Sensor zur Erfassung von Objekten in einem Überwachungsbereich mit Sensorkomponenten und einer Auswerteeinheit (9). In Abhängigkeit von Sensorsignalen von Sensorkomponenten wird in der Auswerteeinheit (9) ein Objektfeststellungssignal generiert. Eine Selektoreinheit und eine Eingabeschnittstelle (11) mit mechanischem Einstellelement sind vorgesehen, wobei abhängig von einer Einstell-Konfiguration des mechanischen Einstellelement der Eingabeschnittstelle in der Selektoreinheit (10) eine Auswahl eines Parametersatzes aus einer Anzahl von vorkonfigurierten Parametersätzen getroffen wird. Der ausgewählte Parametersatz wird für die Funktion des Sensors übernommen.

## Beschreibung

Die Erfindung betrifft einen Sensor.

Derartige optische Sensoren werden generell zur Erfassung von Objekten in einem Überwachungsbereich eingesetzt.

Der Sensor kann insbesondere als optischer Sensor ausgebildet sein.

In der einfachsten Ausführungsform weist der optische Sensor als Sensorkomponente nur einen Lichtstrahlen emittierenden Sender und einen Lichtstrahlen empfangenden Empfänger auf. Der optische Sensor kann dabei als Lichttaster, Distanzsensor, Reflexionslichtschranke und dergleichen ausgebildet sein, wobei bei diesen Ausführungsformen der Sender und der Empfänger in einem gemeinsamen Gehäuse integriert sind. Weiterhin kann der optische Sensor auch als Lichtschranke ausgebildet sein. In diesem Fall sind der Sender und Empfänger in separaten Gehäusen untergebracht.

Generell kann der optische Sensor auch mehrere Sender und/oder Empfänger aufweisen. Ein Beispiel für einen derartigen optischen Sensor ist ein Lichtvorhang.

Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern.

Der optische Sensor weist als Elektronikkomponente eine Auswerteeinheit auf, in welcher in Abhängigkeit von Empfangssignalen des oder der Empfänger ein Objektfeststellungssignal oder Messwerte in Form von Entfernungswerten, Objektgrößen, Abschattungsbereichen des Objekts oder dergleichen generiert werden. Das Objektfeststellungssignal kann insbesondere als binäres Schaltsignal ausgebildet sein, dessen Schaltzustände angeben, ob sich ein Objekt im Überwachungsbereich befindet oder nicht. Das Objektfeststellungssignal kann alternativ ein analoges Signal, beispielsweise ein Distanzwert sein.

Eine generelle Anforderung für derartige Sensoren besteht darin, dass deren Funktion an die jeweilige Applikation angepasst werden muss.

Bei bekannten Sensoren sind hierfür Eingabeschnittstellen mit mechanischen Einstellelementen vorgesehen. Typischerweise weist eine solche Eingabeschnittstelle eine Anzahl von mechanischen Einstellelementen in Form von Jumpern, Drahtbrücken oder Schaltern, insbesondere DIP Schaltern auf.

Mit den mechanischen Einstellelementen sind unterschiedliche Eingabevarianten möglich, die ein Benutzer manuell eingeben kann. Hat der Benutzer eine bestimmte Eingabevariante eingegeben, wird eine dieser fest zugeordneten Gerätekonfiguration aktiviert, mit der der Sensor dann betrieben wird.

Nachteilig hierbei ist, dass mit den mechanischen Einstellelementen der Eingabeschnittstelle nur eine begrenzte Anzahl von Eingabevarianten realisiert werden kann, sodass auch die Anzahl der einstellbaren Gerätekonfigurationen begrenzt ist. Damit ist oftmals nur eine unzureichende Applikationsanpassung des Sensors möglich.

Der Erfindung liegt die Aufgabe zugrunde einen Sensor der eingangs genannten Art bereitzustellen, welcher flexibel und mit geringem konstruktivem Aufwand an unterschiedliche Applikationen angepasst werden kann.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen vorgesehen.

Die Erfindung betrifft einen Sensor zur Erfassung von Objekten in einem Überwachungsbereich mit Sensorkomponenten und einer Auswerteeinheit. In Abhängigkeit von Sensorsignalen von Sensorkomponenten wird in der Auswerteeinheit ein Objektfeststellungssignal generiert. Eine Selektoreinheit und eine Eingabeschnittstelle mit mechanischem Einstellelement sind vorgesehen, wobei abhängig von einer Einstell-Konfiguration des mechanischen Einstellelements der Eingabeschnittstelle in der Selektoreinheit eine Auswahl eines Parametersatzes aus einer Anzahl von vorkonfigurierten Parametersätzen getroffen wird. Der ausgewählte Parametersatz wird für die Funktion des Sensors übernommen.

Der erfindungsgemäße Sensor dient zur Erfassung von Objekten in einem Überwachungsbereich. Hierzu weist der Sensor Sensorkomponenten und eine Auswerteeinheit auf, wobei in der Auswerteeinheit abhängig von Sensorsignalen ein Objektfeststellungssignal generiert wird.

Zur applikationsspezifischen Einstellung der Funktion des Sensors weist dieser erfindungsgemäß eine Eingabeschnittstelle mit einer Anzahl von mechanischen Einstellelementen und eine Selektoreinheit auf.

Mit den mechanischen Einstellelementen der Eingabeschnittstelle kann ein Benutzer eine bestimmte Einstell-Konfiguration vorgeben. Abhängig von dieser Einstell-Konfiguration erfolgt in der Selektoreinheit eine Auswahl eines Parametersatzes aus einer Anzahl von vorkonfigurierten Parametersätzen, wobei dann der ausgewählte Parametersatz für die Funktion des Sensors übernommen wird.

Der Grundgedanke der Erfindung besteht somit darin, dass im Gegensatz zu bekannten Sensoren nicht jeder Einstell-Konfiguration der mechanischen Einstellelemente der Eingabeschnittstelle eine bestimmte fest vorgegebene Gerätekonfiguration des Sensors hinterlegt ist, so dass bei Einstellung der Einstell-Konfiguration diese Gerätekonfiguration für den Sensor übernommen wird.

Erfindungsgemäß können mit der Selektoreinheit unterschiedliche Parametersätze den einzelnen Einstell-Konfigurationen der Eingabeschnittstelle zugeordnet werden. Durch die mit der Selektoreinheit ermöglichte Auswahlmöglichkeit von Parametersätzen und deren Zuordnung zu Einstell-Konfigurationen der Eingabeschnittstelle steht somit eine erheblich größere Anzahl von Parametersätzen zur Verfügung, die mit Einstell-Konfigurationen der Eingabeschnittstelle von einem Benutzer ausgewählt werden kann. Damit wird eine erheblich erweiterte und verbesserte Anpassung des Sensors an unterschiedliche Applikationen ermöglicht.

Besonders vorteilhaft ist mit der Selektoreinheit aus einer Gesamtzahl von Parametersätzen eine Anzahl von vorkonfigurierten Parametersätzen auswählbar.

Die Gesamtanzahl der zur Verfügung stehenden Parametersätze ist typischerweise erheblich größer als die Anzahl der mit den mechanischen Einstellelementen der Eingabeschnittstelle einstellbaren Einstell-Konfigurationen. Alle Parametersätze sind vorkonfiguriert, das heißt mit diesen kann eine lauffähige Gerätefunktion des Sensors vorgegeben werden. Mit einer in der Selektoreinheit hinterlegten Selektormethode kann aus der Gesamtzahl der vorkonfigurierten Parametersätze eine Anzahl von vorkonfigurierten Parametersätzen ausgewählt werden, deren Anzahl vorteilhaft der Anzahl der Einstell-Konfigurationen der Eingabeschnittstelle entspricht, so dass ein Benutzer durch Einstellen einer Einstell-Konfiguration einen vorkonfigurierten Parametersatz seiner Wahl auswählen kann, der dann für die Funktion des Sensors übernommen wird. Die mittels der Selektoreinheit durchgeführte Auswahl ist vorteilhaft an die möglichen Applikationen des Sensors angepasst. Durch Einstellen der Einstell-Konfiguration an der Eingabeschnittstelle kann der Benutzer dann aus der Menge von geeigneten Parametersätzen den von ihm gewünschten Parametersatz auswählen. Besonders vorteilhaft wird mittels der Selektoreinheit die Zuordnung von Parametersätzen zu mechanischen Einstellelementen der Eingabeschnittstelle vorgegeben.

Damit erfolgt mit der Selektoreinheit nicht nur eine Auswahl von vorkonfigurierten Parametersätzen aus einer Gesamtzahl von Parametersätzen, vielmehr werden mittels der Selektoreinheit auch die ausgewählten Parametersätze einzelnen mechanischen Einstellelementen zugeordnet, so dass mit der Selektoreinheit eine komplette Voreinstellung von Parametersätzen vorgenommen wird, die dann ohne weitere Maßnahmen von einem Benutzer durch Einstellen der Einstell-Konfiguration der Eingabeschnittstelle einzeln ausgewählt werden können, um so einen Parametersatz für die Funktion des Sensors zu übernehmen.

Gemäß einer vorteilhaften Weiterbildung wird mit der Selektoreinheit bestimmt, welche mechanischen Einstellelemente der Eingabeschnittstelle ausgewertet werden.

Damit wird zusätzlich mit der Selektoreinheit die Funktionalität der Eingabeschnittstelle bestimmt.

Zweckmäßig weist die Eingabeschnittstelle als mechanisches Einstellelement eine Anordnung von Drahtbrücken, Jumpern oder Schaltern auf.

Die so ausgebildete Eingabeschnittstelle ist von bekannten Standard-Bauelementen gebildet, deren Funktionalität durch die Selektoreinheit erweitert wird.

Gemäß einer vorteilhaften Ausführungsform ist die Funktionalität der Selektoreinheit parametrierbar.

Durch die Parametrierbarkeit der Selektoreinheit kann deren Funktionsumfang geändert werden, wodurch eine erhebliche Erweiterung hinsichtlich der Anpassung des Sensors an unterschiedliche Applikationen ermöglicht wird. Zweckmäßig ist zur Parametrierung der Selektoreinheit eine Konfigurationsschnittstelle vorgesehen.

Dabei ist die Konfigurationsschnittstelle eine leitungsgebundene oder berührungslos arbeitende Schnittstelle.

Beispiele für leitungsgebundene Schnittstellen sind USB- oder IO-Link-Schnittstellen. Beispiele für berührungslos arbeitende Schnittstellen sind Funk-Schnittstellen oder optische Schnittstellen.

An die Konfigurationsschnittstelle kann generell ein Konfigurationsgerät wie zum Beispiel ein Laptop oder PC angeschlossen werden, mit dem die Funktionalität der Selektoreinheit vorgegeben wird.

Dabei kann insbesondere durch die Parametrierung eine Selektormethode der Selektoreinheit vorgegeben werden.

Durch die Parametrierung kann somit die Funktion der Selektoreinheit derart geändert werden, dass insbesondere eine Anpassung des Sensors an bestimmte Applikationen erfolgt.

Beispielsweise kann die Selektormethode dahingehend vorgegeben oder geändert werden, dass aus der Gesamtzahl von vorhandenen Parametersätzen die Art und Zusammensetzung der vorkonfigurierten Parametersätze vorgegeben werden kann, aus welchen durch Vorgabe von Einstell-Konfigurationen der mechanischen Einstellelemente der Eingabeschnittstelle der Benutzer einen Parametersatz auswählt, der dann die Funktion des Sensors bestimmt.

Ebenso können durch die Parametrierung Zuordnungen von Einstell-Konfigurationen zu bestimmten vorkonfigurierten Parametersätzen definiert werden. Ebenso kann durch die Parametrierung vorgegeben werden, welche mechanischen Einstellelemente oder Eingabeschnittstellen bei der Auswahl von Parametersätzen ausgewertet werden.

Auch können durch die Parametrierung eine Selektormethode der Selektoreinheit vorgesehen sein.

Damit kann die Zusammenstellung der einen Parametersatz bildenden Parameter vorgegeben werden.

Typischerweise enthält ein Parametersatz Funktionsparameter oder IO-Parameter.

Funktionsparameter können beispielsweise Parameter sein, die die Funktion von Sensorkomponenten festlegen. Bei Sensorkomponenten in Form von Strahlung emittierenden Sendern kann als Funktionsparameter die Sendeleistung vorgegeben werden. Bei Sensorkomponenten in Form von Strahlung empfangenden Empfängern kann die Empfangssignalverstärkung als Funktionsparameter vorgegeben werden.

Auch kann die Auflösung des Sensors als Funktionsparameter vorgesehen sein. Auch kann die Reaktionszeit des Sensors als Funktionsparameter vorgesehen sein, beispielsweise derart, dass eine Anzahl von insbesondere aufeinanderfolgenden Objektdetektionen vorliegen muss, damit ein Objektfeststellungssignal generiert wird.

IO-Parameter können generell als bestimmte Funktionen, die Ein- oder Ausgängen des Sensors zugeordnet sind, definiert sein.

Vorteilhaft erfolgt die Parametrierung der Selektoreinheit bei der Herstellung des Sensors oder an dessen Einsatzort.

Die Parametrierung ist damit nicht nur in der Produktionslinie des Herstellers möglich, sondern auch bei dem Anwender, der den Sensor applikationsspezifisch zu Überwachungszwecken einsetzt. Besonders vorteilhaft kann der Sensor in der Produktionslinie erstmals parametriert werden, wobei dann bei Bedarf der Anwender eine Umparametrierung vornehmen kann.

Gemäß einer konstruktiv vorteilhaften Ausgestaltung umfasst die Selektoreinheit eine Rechnereinheit und zugeordnete Speichereinheiten, in welcher Parametersätze und Konfigurationsdaten für die Funktionalität der Selektoreinheit gespeichert sind.

Weiterhin umfasst die Selektoreinheit Ausgabemittel, über welche die Parameter des ausgewählten Parametersatzes zur Festlegung der Funktion des Sensors ausgebbar sind.

Bei einer Parametrierung der Selektoreinheit liest die Rechnereinheit die entsprechenden Daten aus den Speichereinheiten aus und übernimmt diese zur Einstellung der Funktionalität der Selektoreinheit.

Ist während des Betriebs des Sensors, das heißt nach erfolgter Parametrierung mit den mechanischen Einstellelementen der Eingabeschnittstelle eine Einstell-Konfiguration vorgegeben worden, wird entsprechend der Einstell-Konfiguration mittels der Selektoreinheit der zugeordnete Parametersatz ausgewählt und für die Funktion des Sensors übernommen. Hierzu werden die Parameter des Parametersatzes über die Ausgabemittel ausgegeben und dann vom Sensor, insbesondere dessen Sensorkomponenten übernommen. Auch können die Parameter von der Auswerteeinheit zur Signalauswertung übernommen werden.

Insbesondere ist es auch möglich, dass die Selektoreinheit Bestandteil der Auswerteeinheit ist.

Der erfindungsgemäße Sensor kann insbesondere als Sicherheitssensor ausgebildet sein, das heißt der Sensor weist dann einen fehlersicheren Aufbau auf, so dass er in sicherheitsrelevanten Applikationen, zum Beispiel im Bereich des Personenschutzes eingesetzt werden kann.

Ein fehlersicherer Aufbau wird insbesondere durch einen redundanten, vorteilhaft zweikanaligen Aufbau der Auswerteeinheit, beispielsweise in Form zweier sich zyklisch gegenseitig überwachenden Rechnereinheiten realisiert.

Wird mit den Rechnereinheiten der Auswerteeinheit ein Fehler detektiert, geht der Sicherheitssensor in den sicheren Zustand, beispielsweise dadurch, dass dieser ein Objektfeststellungssignal generiert, mit dem eine überwachte, gefahrbringende Maschine abgeschaltet wird.

Die Fehlersicherheit des Sensors kann dadurch noch erhöht werden, dass eine Testeinheit vorgesehen ist, mittels derer die Funktion der Eingabeschnittstelle überprüfbar ist.

Insbesondere werden in der Testeinheit Testsignale generiert, die an ein erstes mechanisches Einstellelement der Eingabeschnittstelle ausgegeben werden, durch alle mechanischen Einstellelemente bis zum letzten mechanischen Einstellelement durchgeschleust und von diesen in die Testeinheit rückgelesen werden.

Zweckmäßig sind zeitlich variierende Testsignale vorgesehen.

Die in die Testeinheit rückgelesenen Testsignale werden mit einer definierten Erwartungshaltung verglichen, wobei ein fehlerfreier Betrieb der Eingabeschnittstelle nur dann vorliegt, wenn die rückgelesenen Testsignale der Erwartungshaltung entsprechen. In einem Fehlerfall geht der Sensor in den sicheren Zustand über.

Um die Funktionalität weiter zu erhöhen weist die Testeinheit einen fehlersicheren, redundanten Aufbau auf.

Insbesondere ist die Testeinheit Bestandteil der Auswerteeinheit.

Dies ist dann besonders vorteilhaft, wenn der Sensor ein Sicherheitssensor ist und die Auswerteeinheit einen redundanten Aufbau aufweist, so dass dann auch die Testeinheit einen redundanten Aufbau aufweist.

Der erfindungsgemäße optische Sensor kann prinzipiell ein Radarsensor oder ein Ultraschallsensor sein. Besonders vorteilhaft ist der Sensor ein optischer Sensor.

Der optische Sensor kann als Lichttaster, Distanzsensor, Lichtschranke, Reflexionslichtschranke oder auch als Scanner, insbesondere Flächendistanzsensor, oder Lichtvorhang ausgebildet sein.

Die Erfindung wird im Folgenden anhand der Zeichnungen erläutert. Es zeigen:
- Figur 1:: Ausführungsbeispiel des erfindungsgemäßen Sensors in Form eines Lichtvorhangs.
- Figur 2:: Blockschaltbild einer Selektoreinheit mit einer zugeordneten Eingabeschnittstelle für den Lichtvorhang gemäß Figur 1.
- Figur 3:: Funktionsdiagramm der Selektoreinheit gemäß Figur 2.
- Figur 4:: Erstes Beispiel einer Selektormethode für die Selektoreinheit gemäß den Figuren 2 und 3.
- Figur 5:: Zweites Beispiel einer Selektormethode für die Selektoreinheit gemäß den Figuren 2 und 3.
- Figur 6:: Ausführungsbeispiel einer Testeinheit für den Lichtvorhang gemäß den Figuren 1 und 2.

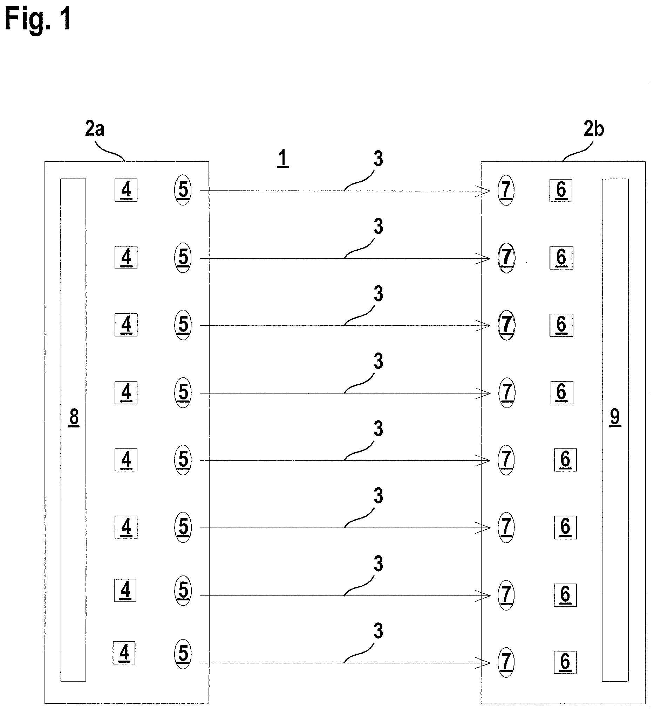

Figur 1 zeigt schematisch den Aufbau eines Ausführungsbeispiels des erfindungsgemäßen Sensors in Form eines Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 als erste Sensorkomponenten und diesen zugeordnete Optikelemente bildenden Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 als zweite Sensorkomponenten auf, welche jeweils ein Optikelement in Form einer Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Alternativ kann der Lichtvorhang 1 auch als Reflexions-Lichtvorhang 1 ausgebildet sein. Dann sind alle Sender 4 und Empfänger 6 in einem Gehäuse 2a oder 2b angeordnet, welche an einem Rand des Überwachungsbereichs angeordnet sind. Am anderen Ende befindet sich ein Reflektor. Bei freiem Überwachungsbereich werden die Lichtstrahlen 3 der Sender 4 über den Reflektor zurück zum jeweils zugeordneten Empfänger 6 geführt.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet. Insbesondere kann die Sendersteuerung 8 oder Auswerteeinheit 9 aus zwei sich zyklisch überwachenden Rechnereinheiten bestehen.

Mit dem als Sicherheitssensor ausgebildeten Lichtvorhang 1 wird beispielsweise ein Gefahrenbereich an einer Maschine überwacht. Nur bei freiem Überwachungsbereich wird der Betrieb der Maschine freigegeben. Wird in der Auswerteeinheit 9 ein Fehler aufgedeckt, wird ein Schaltsignal im Lichtvorhang 1 derart generiert, dass die Maschine abgeschaltet wird, das heißt es erfolgt ein Übergang in einen sicheren Zustand.

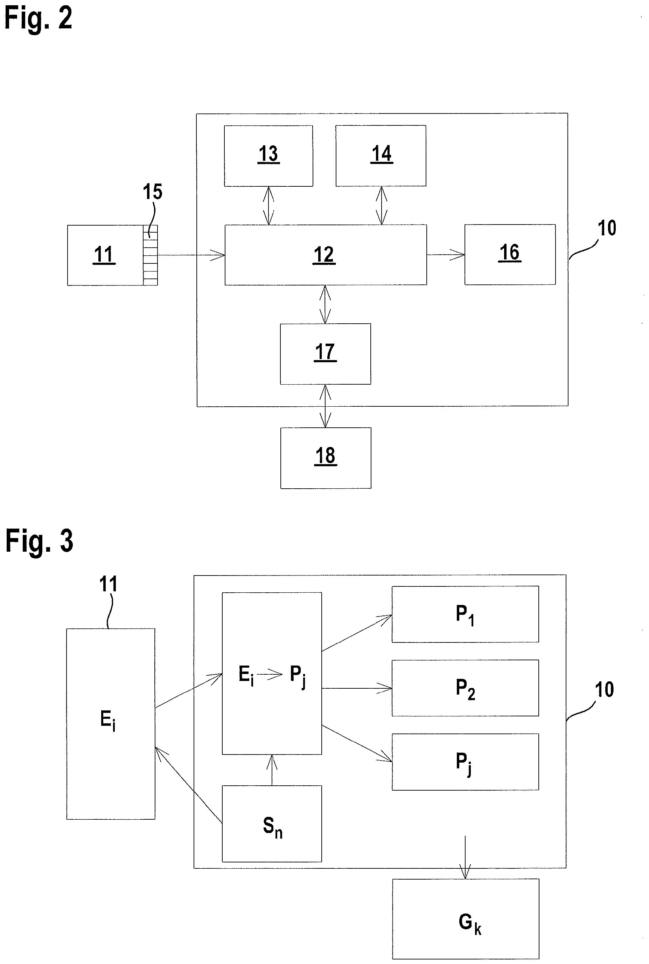

Figur 2 zeigt ein Ausführungsbeispiel einer Selektoreinheit 10 mit einer zugeordneten Eingabeschnittstelle 11 für den Lichtvorhang 1 gemäß Figur 1.

Die Selektoreinheit 10 weist eine Prozessoreinheit 12 auf, die im einfachsten Fall von einem Controller oder dergleichen gebildet sein kann. Im vorliegenden Fall ist die Prozessoreinheit 12 von den die redundante Auswerteeinheit 9 des Lichtvorhangs 1 bildenden Rechnereinheiten gebildet. Auch die weiteren Komponenten der Selektoreinheit 10 können in der Sendersteuerung 8 oder Auswerteeinheit 9 des Lichtvorhangs 1 integriert sein.

Die Selektoreinheit 10 weist weiterhin eine erste Speichereinheit 13 auf, in der Konfigurationsdaten für mit der Selektoreinheit 10 durchführbare Selektromethoden gespeichert sind. Die Selektoreinheit 10 weist weiterhin eine zweite Speichereinheit 14 auf, in der Parametersätze für den Lichtvorhang 1 gespeichert sind. In der Speichereinheit 14 ist ein Vorrat von Parametersätzen für den Lichtvorhang 1, das heißt eine Gesamtzahl von Parametersätzen gespeichert. Alle gespeicherten Parametersätze sind derart vorkonfiguriert, dass mit diesen jeweils eine lauffähige Gerätekonfiguration des Lichtvorhangs 1 oder allgemein des Sensors vorgegeben werden kann.

Die Parametersätze umfassen Funktionsparameter, das heißt Parameter für die Sender 4, zum Beispiel deren Sendeleistungen, für die Empfänger 6, zum Beispiel deren Empfangssignalverstärkung, und auch für die in der Auswerteeinheit 9 durchgeführte Signalauswertung, zum Beispiel Auflösung oder Reaktionszeit zur Generierung des Objektfeststellungssignals. Auch können für den Lichtvorhang 1 applikationsspezifische Parameter für ein Muting oder Blanking vorgegeben werden.

Bei einem Muting handelt es sich um ein temporäres Stummschalten einzelner oder aller Strahlachsen des Lichtvorhangs 1 so dass ein zulässiges, nicht gefahrbringendes Objekt den Lichtvorhang 1 passieren kann, ohne dass dieser ein Schaltsignal generiert.

Bei einem Blanking sind einige der Strahlachsen durch einen nicht gefahrbringenden Gegenstand unterbrochen. Ein Objektfeststellungssignal wird mit dem Lichtvorhang 1 nur dann generiert, wenn nicht alle ausgeblendeten (geblankten) Strahlachsen unterbrochen sind oder wenn wenigstens eine nicht geblankte Strahlachse unterbrochen ist.

An die Prozessoreinheit 12 der Selektoreinheit 10 ist die Eingabeschnittstelle 11 angeschlossen, die eine Anzahl von mechanischen Einstellelementen 15 aufweist. Die Eingabeschnittstelle 11 kann mechanische Einstellelemente 15 in Form von Drahtbrücken, Jumpern oder Schaltern, insbesondere DIP Schaltern aufweisen, die von einem Benutzer manuell betätigbar sind. Durch Betätigen von mechanischen Einstellelementen 15 werden Einstell-Konfigurationen generiert, die der Prozessoreinheit 12 der Selektoreinheit 10 zugeführt werden. Vorteilhaft können die Einstellmöglichkeiten auch gemischt werden. Beispielsweise kann eine Einstellung sowohl über DIP-Schaltern und zusätzlich über Drahtbrücken erfolgen.

An die Prozessoreinheit 12 der Selektoreinheit 10 sind weiterhin Ausgabemittel 16 angeschlossen, über welche eingestellte Parameter ausgegeben werden um die Funktion des Lichtvorhangs 1 entsprechend einzustellen.

Die Selektoreinheit 10 weist weiterhin eine Konfigurationsschnittstelle 17 auf, welche mit der Prozessoreinheit 12 verbunden ist. An die Konfigurationsschnittstelle 17 kann ein Konfigurationsgerät 18 wie zum Beispiel ein Laptop oder PC angeschlossen werden um die Selektoreinheit 10 zu parametrieren oder Einstellparameter zu konfigurieren.

Figur 3 zeigt ein Funktionsdiagramm für die Anordnung gemäß Figur 2.

Mit dem an die Konfigurationsschnittstelle 17 angeschlossenen Konfigurationsgeräte 18 kann die Selektoreinheit 10 parametriert werden, wobei durch die Parametrierung eine Selektormethode Sₙ vorgegeben wird. Für die Parametrierung der Selektoreinheit 10 werden Konfigurationsdaten aus der Speichereinheit 13 ausgelesen. Mit der Parametrierung wird eine durch die Selektoreinheit 10 bewirkte Zuordnung von Einstell-Konfigurationen Ei (i= 1, 2, ...), die mit den mechanischen Einstellelementen 15 der Eingabeschnittstelle 11 eingestellt werden, zu ausgewählten Parametersätzen Pⱼ (ⱼ = 1, 2, 3) die aus der Gesamtzahl von in der Speichereinheit 14 gespeicherten Parametersätzen ausgewählt werden, festgelegt.

Entsprechend der durch Parametrierung vorgegebenen Selektormethode gibt die Selektoreinheit 10 nicht nur die Zuordnung von Einstell-Konfigurationen Eⱼ zu ausgewählten Parametersätzen Pⱼ vor. Vielmehr bestimmt die Selektoreinheit 10 welche der mechanischen Einstellelemente 15 der Eingabeschnittstelle 11 hierbei ausgewertet werden.

Gibt nach erfolgter Parametrierung, das heißt während des Betriebs des Lichtvorhangs 1 ein Benutzer eine Einstell-Konfiguration Eⱼ an der Eingabeschnittstelle 11 ein, aktiviert die Selektoreinheit 10 den dieser Einstell-Konfiguration Eⱼ entsprechenden Parametersatz Pⱼ und gibt die entsprechenden Parameter über die Ausgabemittel 16 aus, wodurch selbsttätig eine entsprechende Gerätefunktion G_{K} des Lichtvorhangs 1 eingestellt wird.

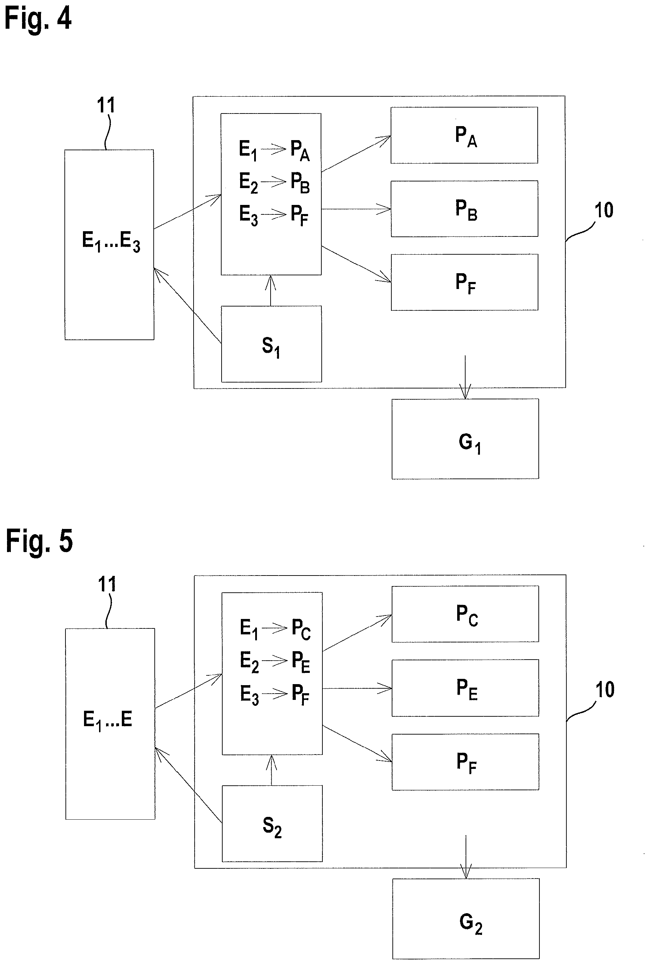

Die Figuren 4 und 5 zeigen hierfür zwei konkrete Anwendungsbeispiele.

Bei dem Ausführungsbeispiel gemäß Figur 4 sind drei Einstell-Konfigurationen E₁, E₂, E₃ möglich. Durch die durch Parametrierung vorgegebene Selektormethode S₁ sind aus der Gesamtzahl der in der Speichereinheit 14 gespeicherten Parametersätze die Parametersätze P_{A}, P_{B}, P_{F} auswählbar. Zudem wird mittels der Selektoreinheit 10 die Einstell-Konfiguration E₁ dem Parametersatz P_{A}, die Einstell-Konfiguration E₂ dem Parametersatz P_{B} und die Einstell-Konfiguration E₃ dem Parametersatz P_{F} zugeordnet.

Wählt ein Benutzer beispielsweise die Einstell-Konfiguration E₁ an der Eingabeschnittstelle 11 aus so erfolgt in der Selektoreinheit 10 die Zuordnung der Einstell-Konfiguration E₁ zu dem Parametersatz P_{A} der dann ausgewählt wird, so dass dann mit diesem P_{A} die Gerätekonfiguration G₁ festgelegt und aktiviert wird, mit der dann der Lichtvorhang 1 betrieben wird.

Bei dem Ausführungsbeispiel gemäß Figur 5 sind wieder die drei Einstell-Konfigurationen E₁, E₂, E₃ möglich. Durch die durch Parametrierung vorgegebene Selektormethode S₂ sind aus der Gesamtzahl der in der Speichereinheit 14 gespeicherten Parametersätze die Parametersätze Pc, P_{E}, P_{F} auswählbar. Zudem wird mittels der Selektoreinheit 10 die Einstell-Konfiguration E₁ dem Parametersatz P_{C}, die Einstell-Konfiguration E₂ dem Parametersatz P_{E} 12 und die Einstell-Konfiguration E₃ dem Parametersatz P_{F} zugeordnet.

Wählt ein Benutzer beispielsweise die Einstell-Konfiguration E₂ an der Eingabeschnittstelle 11 aus so erfolgt in der Selektoreinheit 10 die Zuordnung der Einstell-Konfiguration E₂ zu dem Parametersatz P_{E} der dann ausgewählt wird, so dass dann mit diesem Parametersatz P_{E} die Gerätekonfiguration G₂ festgelegt und aktiviert wird, mit der dann der Lichtvorhang 1 betrieben wird.

Darüber hinaus können durch die Parametrierung der Selektoreinheit 10 auch unterschiedliche Anzahl von Einstell-Konfigurationen vorgegeben werden (nicht gezeigt).

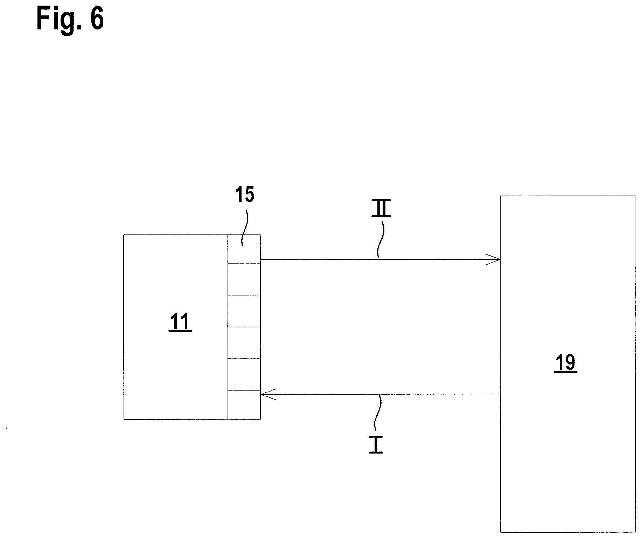

Figur 6 zeigt ein Ausführungsbeispiel einer Testeinheit 19 für den Lichtvorhang 1 gemäß den Figuren 1 und 2. Die Testeinheit 19 ist im vorliegenden Fall Bestandteil der Sendersteuerung 8 oder Auswerteeinheit 9 des als Sicherheitssensor ausgebildeten Lichtvorhangs 1 und weist demzufolge einen fehlersicheren mehrkanaligen Aufbau auf.

Mit der Testeinheit 19 erfolgt eine Funktionsüberprüfung der Eingabeschnittstelle 11. Hierzu gibt die Testeinheit 19 Testsignale an ein erstes mechanisches Einstellelement 15 der Eingabeschnittstelle 11 (Pfeil I in Figur 6). Dann werden die Testsignale durch die mechanischen Einstellelemente 15 bis zum letzten mechanischen Einstellelement 15 der Eingabeschnittstelle 11 durchgeschleust und von dort in die Testeinheit 19 rückgelesen (Pfeil II in Figur 6). Im vorliegenden Fall sind zeitlich variierende Testsignale vorgesehen, die vorteilhaft eine definierte Kodierung aufweisen. In der Testeinheit 19 werden die rückgelesenen Testsignale mit definierten Erwartungssignalen vergleichen. Eine fehlerfreie Funktion der Eingabeschnittstelle 11 liegt nur dann vor, wenn die rückgelesenen Testsignale der Erwartungshaltung entsprechen. Wird ein Fehlerzustand erkannt, wechselt der Lichtvorhang 1 in den sicheren Zustand.

### B ezugszei chenli ste

- (1): Lichtvorhang
- (2a): Gehäuse
- (2b): Gehäuse
- (3): Lichtstrahlen
- (4): Sender
- (5): Sendeoptik
- (6): Empfänger
- (7): Empfangsoptik
- (8): Sendersteuerung
- (9): Auswerteeinheit
- (10): Selektoreinheit
- (11): Eingabeschnittstelle
- (12): Prozessoreinheit
- (13): Speichereinheit
- (14): Speichereinheit
- (15): mechanisches Einstellelement
- (16): Ausgabemittel
- (17): Konfigurationsschnittstelle
- (18): Konfigurationsgerät
- (19): Testeinheit

## Patentansprüche

1. Sensor zur Erfassung von Objekten in einem Überwachungsbereich mit Sensorkomponenten und einer Auswerteeinheit (9), wobei in Abhängigkeit von Sensorsignalen von Sensorkomponenten in der Auswerteeinheit (9) ein Objektfeststellungssignal generiert wird, **dadurch gekennzeichnet, dass** eine Selektoreinheit (10) und eine Eingabeschnittstelle (11) mit mechanischen Einstellelementen (15) vorgesehen sind, wobei abhängig von einer Einstell-Konfiguration der mechanischen Einstellelemente der Eingabeschnittstelle in der Selektoreinheit (10) eine Auswahl eines Parametersatzes aus einer Anzahl von vorkonfigurierten Parametersätzen getroffen wird und der ausgewählte Parametersatz für die Funktion des Sensors übernommen wird.

2. Sensor nach Anspruch 1, **dadurch gekennzeichnet, dass** mit der Selektoreinheit (10) aus einer Gesamtzahl von Parametersätzen eine Anzahl von vorkonfigurierten Parametersätzen auswählbar ist.

3. Sensor nach einem der Ansprüche 1 oder 2, **dadurch gekennzeichnet, dass** mittels der Selektoreinheit (10) die Zuordnung von Einstell-Konfigurationen der mechanischen Einstellelemente (15) der Eingabeschnittstelle (11) zu vorkonfigurierten Parametersätzen festgelegt wird.

4. Sensor nach einem der Ansprüche 1-3, **dadurch gekennzeichnet, dass** mit der Selektoreinheit (10) bestimmt wird, welche mechanischen Einstellelemente (15) der Eingabeschnittstelle (11) ausgewertet werden.

5. Sensor nach einem der Ansprüche 1-4, **dadurch gekennzeichnet, dass** die Eingabeschnittstelle (11) als mechanisches Einstellelement (15) eine Anordnung von Drahtbrücken, Jumpern oder Schaltern aufweist.

6. Sensor nach einem der Ansprüche 1-5, **dadurch gekennzeichnet, dass** die Funktionalität der Selektoreinheit (10) parametrierbar ist.

7. Sensor nach Anspruch 6, **dadurch gekennzeichnet, dass** zur Parametrierung der Selektoreinheit (10) eine Konfigurationsschnittstelle (17) vorgesehen ist.

8. Sensor nach Anspruch 7, **dadurch gekennzeichnet, dass** die Konfigurationsschnittstelle (17) eine leitungsgebundene oder berührungslos arbeitende Schnittstelle ist.

9. Sensor nach einem der Ansprüche 6-8, **dadurch gekennzeichnet, dass** durch die Parametrierung eine Selektormethode der Selektoreinheit (10) vorgegeben wird.

10. Sensor nach einem der Ansprüche 6-9, **dadurch gekennzeichnet, dass** durch die Parametrierung der Selektoreinheit (10) vorkonfigurierte Parametersätze vorgegeben werden.

11. Sensor nach einem der Ansprüche 1 - 10, **dadurch gekennzeichnet, dass** ein Parametersatz Funktionsparameter oder IO-Parameter enthält.

12. Sensor nach einem der Ansprüche 6 - 11, **dadurch gekennzeichnet, dass** die Parametrierung der Selektoreinheit (10) bei der Herstellung des Sensors oder an dessen Einsatzort erfolgt.

13. Sensor nach einem der Ansprüche 1 - 12, **dadurch gekennzeichnet, dass** die Selektoreinheit (10) eine Rechnereinheit und zugeordnete Speichereinheiten (13, 14) aufweist, in welchen Parametersätze und Konfigurationsdaten für die Funktionalität der Selektoreinheit (10) gespeichert sind.

14. Sensor nach einem der Ansprüche 1 - 14, **dadurch gekennzeichnet, dass** die Selektoreinheit (10) Ausgabemittel (16) aufweist, über welche die Parameter des ausgewählten Parametersatzes zur Festlegung der Funktion des Sensors ausgebbar sind.

15. Sensor nach einem der Ansprüche 1 - 14, **dadurch gekennzeichnet, dass** die Selektoreinheit (10) Bestandteil der Auswerteeinheit (9) ist.

16. Sensor nach einem der Ansprüche 1 - 15, **dadurch gekennzeichnet, dass** eine Testeinheit (19) vorgesehen ist, mittels derer die Funktion der Eingabeschnittstelle (11) überprüfbar ist.

17. Sensor nach Anspruch 16, **dadurch gekennzeichnet, dass** in der Testeinheit (19) Testsignale generiert werden, die an ein erstes mechanisches Einstellelement (15) der Eingabeschnittstelle (11) ausgegeben und in die Testeinheit 19 zurückgelesen werden.

18. Sensor nach Anspruch 17, **dadurch gekennzeichnet, dass** in der Testeinheit (19) Testsignale generiert werden, die an ein erstes mechanisches Einstellelement (15) der Eingabeschnittstelle (11) ausgegeben, durch mehrere oder alle mechanischen Einstellelemente (15) durchgeschleust und von diesem in die Testeinheit (19) zurückgelesen werden.

19. Sensor nach einem der Ansprüche 17 oder 18, **dadurch gekennzeichnet, dass** zeitlich variierende Testsignale vorgesehen sind.

20. Sensor nach einem der Ansprüche 16 - 19, **dadurch gekennzeichnet, dass** die Testeinheit (19) einen fehlersicheren, redundanten Aufbau aufweist.

21. Sensor nach einem der Ansprüche 16 - 20, **dadurch gekennzeichnet, dass** die Testeinheit (19) Bestandteil der Auswerteeinheit (9) ist.

22. Sensor nach einem der Ansprüche 1 - 21, **dadurch gekennzeichnet, dass** dieser ein Sicherheitssensor ist.

23. Sensor nach Anspruch 22, **dadurch gekennzeichnet, dass** die Auswerteeinheit (9) einen fehlersicheren, redundanten Aufbau aufweist.

24. Sensor nach einem der Ansprüche 1 - 23, **dadurch gekennzeichnet, dass** dieser ein optischer Sensor ist.

25. Sensor nach Anspruch 24, **dadurch gekennzeichnet, dass** der optische Sensor ein Lichtvorhang (1) ist.
